# EUROPÄISCHE PATENTANMELDUNG

(11) **EP 1 728 545 A1**
(43) Veröffentlichungstag der Anmeldung: **06.12.2006**
(21) Anmeldenummer: 06009907.4
(22) Anmeldetag: 13.05.2006
(51) Int. Cl.: B01D 53/30, G01N 31/22, B01D 53/34

(54) **Verfahren zum Abscheiden von gasförmigen Bestandteilen in gasförmigen Medien sowie Filter zur Durchführung des Verfahrens**

(30) Priorität: 31.05.2005 DE 102005026674
(71) Anmelder: M+W Zander Holding AG, 70499 Stuttgart (DE)
(72) Erfinder: Michael, Markus, 74360 Ilsfeld (DE); Acksel, Alexander, 71665 Vaihingen/Enz (DE); Soldatov, Vladimir, Professor, Minsk, R. Belarus 220100 (RU); Shunkevich, Alexander, Minsk, R. Belarus 220125 (RU)
(74) Vertreter: Jackisch-Kohl, Anna-Katharina

(57) **Zusammenfassung**

Um gasförmige Bestandteile in gasförmigen Medien, insbesondere in Luft, abzuscheiden, wird das Medium durch ein Filter (2) geleitet, das die gasförmigen Bestandteile zurückhält. Damit in einfacher und zuverlässiger Weise der Erschöpfungszustand des Filters (2) erkannt werden kann, ohne daß eine Gasprobe dem zu filtrierenden Medium entnommen werden muß, reagieren die zu entfernenden Bestandteile mit wenigstens einem im Filter (2) vorhandenen Indikator. Durch die Reaktion mit dem Indikator wird eine Farbänderung oder eine optische Änderung des Filtermaterials hervorgerufen. Dadurch kann das Filter (2) zeitnah ausgetauscht, repariert oder regeneriert werden, ohne daß eine chemische Analyse notwendig ist. Das Filtermaterial des Filters (2) enthält funktionelle Gruppen und wenigstens einen protonenempfindlichen Indikator. Die funktionellen Gruppen reagieren mit den zu entfernenden gasförmigen Bestandteilen. Das Verfahren und das Filter (2) werden überall dort eingesetzt, wo gasförmige Bestandteile in gasförmigen Medien abgeschieden werden sollen.

## Beschreibung

Die Erfindung betrifft ein Verfahren zum Abscheiden von gasförmigen Bestandteilen in gasförmigen Medien nach dem Oberbegriff des Anspruches 1 sowie ein Filter zur Durchführung eines solchen Verfahrens nach dem Oberbegriff des Anspruches 12.

### Stand der Technik

Bei der Reinigung unterschiedlicher Gase, insbesondere Luft, wird in der wissenschaftlichen Literatur sehr ausführlich die Anwendung von Chemisorptionsfiltermaterialien beschrieben. Für diesen Zweck sind insbesondere faserige lonenaustauschermaterialien in Form von Schichtmaterialien geeignet, wie Faserstoffe, Stoffe oder papierähnliche Materialien. Um den Augenblick zu erfassen, wenn das Filter die Fähigkeit verliert, die Verunreinigung aus der Luft zu adsorbieren, benötigt man stets eine Laboranalyse. Hierbei werden vor und hinter dem Filter Probenehmer oder Sensoren eingesetzt, die die Konzentration des durch das Filter zu beseitigenden Bestandteiles messen. Aufgrund dieser Messung kann festgestellt werden, wann das Filter nicht mehr in ausreichendem Maße die Bestandteile zurückhält. Die hierfür einzusetzende Meßeinrichtung ist kostspielig und erfordert vom Bedienungspersonal ein erhebliches Know-how. Außerdem kann diese Laboranalyse nicht an Ort und Stelle durchgeführt werden, zum Beispiel wenn das Filter als Individualschutz für Personen in Form von Gasmasken oder Schutzkleidung eingesetzt wird. Bei der Luftreinigung in Reinräumen in der Halbleiterindustrie erfordert die Analyse der Spurenanteile der wichtigsten Verunreinigungen, wie Ammoniak oder Schwefeloxide, lang dauernde Verfahren und kann nicht empfindlich genug unter online-Bedingungen durchgeführt werden.

Die gefährlichsten Verunreinigungen der Luft sowohl für den technologischen Anwendungsbereich als auch für den Personenschutz sind chemisch aktive Substanzen saurer und basischer Natur, zum Beispiel Dämpfe von Säuren und Laugen, zum Beispiel Fluorwasserstoffsäure, Salzsäure, Ammoniak oder Amine, Anhydride von Säuren, wie Schwefel- und Stickstoffoxide. Einige Substanzen, wie Fluor oder Chlor, bilden in der Luft mit Wasserdampf Säuren, die Wasserdampf enthalten und sich wie saure Verunreinigungen verhalten.

In der Chemie sind Verfahren zum Aufspüren verschiedener Verbindungen in Wasser oder Luft durch Auslösen einer Farbreaktion oder Hervorrufen optischer nicht-sichtbare Veränderungen allgemein bekannt. Diese Nachweisreaktionen können entweder ganze Verbindungsgruppen, wie Säuren, Basen, oxidierende Stoffe oder reduzierende Stoffe anzeigen, bestimmte enger definierte Verbindungsklassen anzeigen, wie organisch-aromatische Stoffe, aromatische Amine, Phenole, oder auf einzelne Stoffe, z.B. H₂S oder Formaldehyd, spezifisch sein. Da Farbindikatoren und optische Indikatoren bekannt sind, werden sie auch nicht näher erläutert. Die Art des Farbindikators richtet sich danach, welche chemischen Bestandteile aus dem Gas entfernt werden sollen. Der auszuwählende Farbindikator muß eine Farbreaktion mit der zu entfernenden Verbindung eingehen.

Farbempfindliche Indikatoren zur Prüfung des Erschöpfungszustandes von chemischen Filtern sind beschrieben im Seitenstrom (Bypass-) betrieb, der eine Ausleitung eines Probengasstromes, Kalibration des Probengasstroms und einen farbveränderlichen Indikator in einer transparenten Hülle umfaßt (US 6 187 598; CA 2 344 579 A1).

### Wesen der Erfindung

Der Erfindung liegt die Aufgabe zugrunde, das erfindungsgemäße Verfahren und das erfindungsgemäße Filter so auszubilden, daß in einfacher Weise und dennoch zuverlässig der Erschöpfungszustand des Filters bestimmt und optisch erkannt werden kann, ohne daß eine Gasprobe aus dem zu filtrierenden Medium entnommen werden muß.

Diese Aufgabe wird beim gattungsgemäßen Verfahren erfindungsgemäß mit den kennzeichnenden Merkmalen des Anspruches 1 und beim gattungsgemäßen Filter erfindungsgemäß mit den kennzeichnenden Merkmalen des Anspruches 12 gelöst.

### Beschreibung

Beim erfindungsgemäßen Verfahren wird das zu reinigende gasförmige Medium durch das Filter geleitet, das mit wenigstens einem Indikator versehen ist. Dieser Indikator kann eine chemische Strukturkomponente des Filtermaterials selbst sein, oder auf dem Weg der Imprägnierung in das Filtermaterial gebracht worden sein. Beim Aufbau des Filters als Mehrschichtenfilter kann der Indikator auch eine eigene (separate) Schicht im Filter sein. Ist das Filter mit dem adsorbierten Bestandteil gesättigt, tritt aufgrund der Reaktion dieser Bestandteile mit dem Indikator ein Farbwechsel des Filtermaterials auf. Tritt der Farbwechsel an der Auslaßseite des Filters auf, zeigt dies die Sättigung des Filtermaterials mit den Bestandteilen an. Damit wird dem Benutzer kenntlich gemacht, daß das Filter die Bestandteile nicht mehr adsorbieren kann und ein Austausch bzw. eine Reinigung des Filtermaterials erforderlich ist. Somit kann das Filter zeitnah ausgetauscht, repariert oder regeneriert werden, ohne daß eine chemische Analyse der Zusammensetzung des durch das Filter hindurchgetretenen gasförmigen Mediums notwendig ist. Dieser Farbwechsel kann sehr einfach auch mit einem farbempfindlichen Detektor erfaßt und in ein elektrisches Signal umgewandelt werden das zur Anzeige des Filterdurchbruchs verwendet werden kann.

Eine solche Anordnung erspart kostspielige und zeitraubende naßchemische Analysen oder den Einsatz teurer und anfälliger online-Meßgeräte für Gasphasenkonzentrationen der gasförmigen Bestandteile.

Die Reaktion, die den Farbwechsel hervorruft, kann physikalischer oder chemischer Natur sein. Ein Spezialfall ist eine definierte chemische Reaktion mit funktionellen Gruppen des Indikators. Beispiele für solche strukturellen Gruppen sind -SO₃H, -PO₃H₂, -CO₂H oder -CO₂Na. Die strukturellen Gruppen können sich in der Oberseite des Filtermaterials befinden und/oder in das Filtermaterial integriert sein.

Das Filtermaterial kann aus Vliesstoff, Webstoff, aus aus kurz geschnittenen Fasern bestehendem Fasermaterial, aus film-, papier- oder kartonähnlichem Material, aus Membranen oder aus Granulat in jeder Form und Größe hergestellt werden.

Die Durchleitung des gasförmigen Mediums durch das Filtermaterial kann durch die Saug- oder Druckwirkung einer Fördereinrichtung, z.B. Pumpe oder Ventilator, wie auch durch natürliche Konvektion erfolgen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Abb. 1: eine Anordnung zur Filterung von gasförmigen Bestandteilen aus Gasen mit Filtermaterial das einen Farbumschlag zeigt,
- Abb. 2: eine Abscheidegradkurve, die den Verbrauch des Filters und den gleichzeitigen Farbumschlag für die Filtration von SO₂ zeigt,

- Abb. 3: eine Abscheidegradkurve, die den Verbrauch des Filters und den gleichzeitigen Farbumschlag für die Filtration von NH₃ zeigt,
- Abb. 4: eine Anordnung zur Filterung von gasförmigen Bestandteilen aus Gasen mit Filtermaterial, das einen Farbumschlag zeigt mit vergrößerter Filteroberfläche zur Verringerung des spezifischen Filterwiderstands,
- Abb. 5: eine Anordnung der den Farbumschlag zeigenden Schicht in Kombination mit Filterschichten ohne Farbumschlag,
- Abb. 6: eine gemischte Anordnung verschiedener einen Farbumschlag zeigender Schichten zur gleichzeitigen Anzeige der Erschöpfung kombinierter Filterschichten.

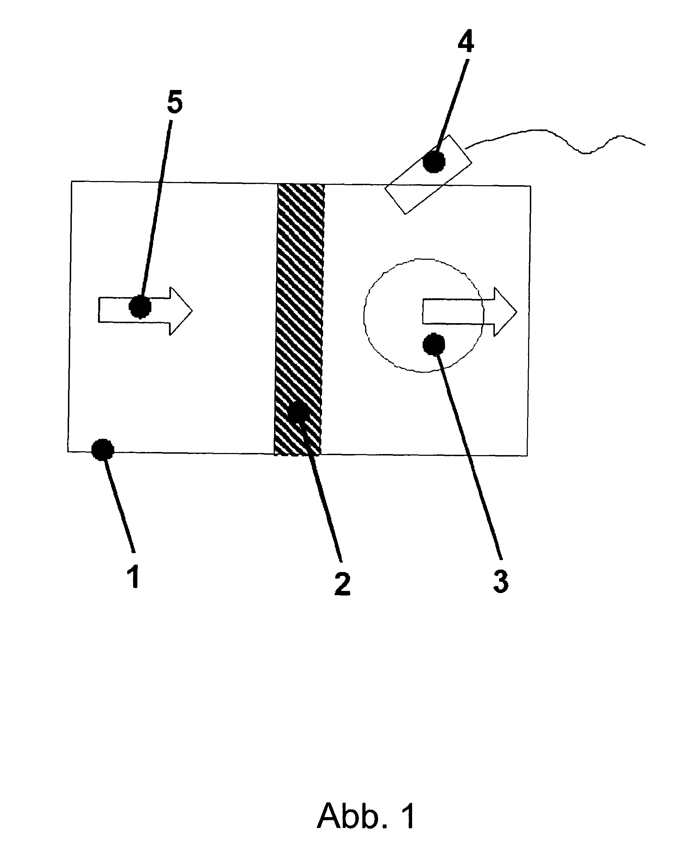

Mit der Anordnung nach Abb. 1 ist eine Feststellung des Filterdurchbruchs möglich. Das Gas strömt durch eine Filtereinheit 1, in der mindestens ein Filter 2 untergebracht ist. Es enthält mindestens einen Indikator, der mit den abzuscheidenden Bestandteilen reagiert. Der Farbumschlag kann beispielsweise durch ein Sichtfenster 3 festgestellt werden. Es ist aber auch möglich, Sensoren 4 zu verwenden, die den Farbumschlag erfassen und ein entsprechendes Signal erzeugen, das ausgewertet wird.

Das Filtrationsverfahren nach Abb. 1 ist insbesondere vorteilhaft bei Schutzvorrichtungen für Personen wie Beatmungsgeräte, Abzug- und Gasmasken oder Schutzkleidung. Der Farbumschlag zeigt in diesem Falle zuverlässig an, daß die Schutzwirkung nicht mehr oder nicht mehr in ausreichendem Maß gewährleistet ist und das Filter 2 ausgetauscht werden muß.

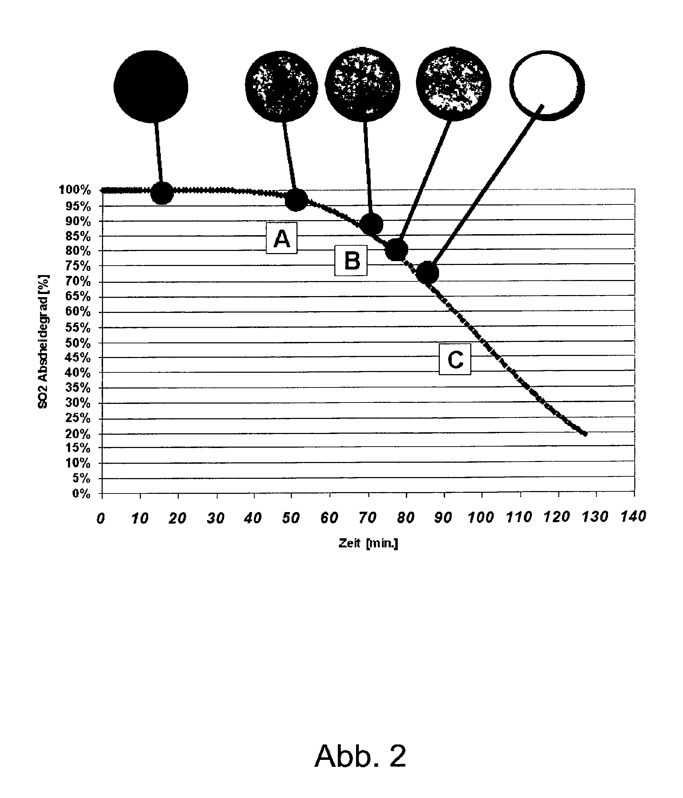

Im Ausführungsbeispiel nach Abb. 2 wird in einer Anordnung, wie in Abb. 1 gezeigt, aus dem Gas SO₂ (Schwefeldioxid) ausgefiltert. Das Filter 2 enthält als funktionelle Gruppe eine quartäre Ammoniumgruppe R₄N⁺ OH⁻, die chemisch an das Filtermaterial gebunden ist, und als Farbindikator Phenolrot, der durch eine Färbetechnik in das Filtermaterial eingebracht ist. Die funktionelle Gruppe (quartäre Ammoniumgruppe) reagiert mit dem Schwefeldioxid nach folgender Gleichung

R₄N⁺ OH⁻ + SO₂ → R₄N⁺ HSO₃⁻

Außerdem reagiert Schwefeldioxid bzw. die von ihm erzeugten Protonen H⁺ mit dem Farbindikator "R-In" nach folgender Beziehung:

SO₂ + H₂O → H⁺ + HSO₃⁻

H⁺ + R-In (gelb) -> R-In H⁺ (violettrot)

Der Farbumschlag von gelb nach violettrot zeigt in diesem Falle zuverlässig an, daß die Filtrationswirkung nicht mehr oder nicht mehr in ausreichendem Maß gewährleistet ist und das Filter 2 ausgetauscht oder regeneriert werden muß. Der in Abb. 2 sichtbare schwarze Rand, der sich nicht verändert, rührt von der Halterung des Filters her, die eine Durchströmung verhindert. Er muß bei der Beurteilung des Umschlags unbeachtet bleiben.

Die Abscheidegradkurve gemäß Abb. 2 zeigt den Abscheidegrad von SO₂ in Abhängigkeit von der Einsatzzeit des Filters 2 an. Am Punkt A treten die ersten Farbveränderungen auf, die mit zunehmender Einsatzdauer zunehmen. Sobald die abströmseitige Filterfläche vollständig oder nahezu vollständig im Farbton umgeschlagen ist, im dargestellten Ausführungsbeispiel nach etwa 80 min, ist die Filterwirkung nicht mehr gegeben.

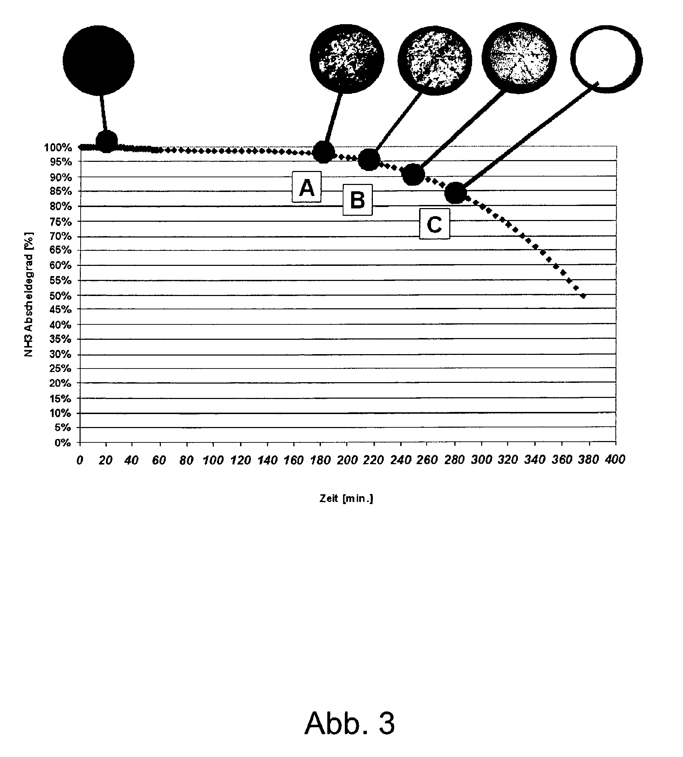

Abb. 3 zeigt die Absorptionswirkung des Filters 2 für Ammoniak zusammen mit dem Erscheinungsbild der abströmseitigen Filterfläche als Funktion der Versuchszeit.

Die funktionelle Gruppe ist in diesem Fall eine Sulfogruppe, chemisch an das Filtermaterial gebunden, und als Indikator Methylorange, durch eine Färbetechnik aufgebracht.

NH₃ reagiert mit dem Filtermaterial bzw. den enthaltenen Sulfogruppen nach der Formel

NH₃ + R-SO₃H -> R-SO₃NH₄

Und mit dem Indikator bzw. seinen Protonen

R-In H⁺ (rot) + NH₃ -> R-In (gelb) + NH₄⁺

Je nach Grad der benötigten Schutzwirkung kann das Filter 2 am Punkt A oder am Punkt B ersetzt werden. Ersatz des Filters 2 am Punkt A ergibt die höheren zeitlich gemittelten Gasreinheiten nach der Filtration, Ersatz des Filters 2 am Punkt B ergibt niedrigere Betriebskosten durch einen verlängerten Einsatz des Filters, aber höhere mittlere Konzentrationen des Ammoniaks im gefilterten Gas.

Es ist möglich, die immobilisierten Indikatoren so auszuwählen, daß sie die Farbe des Filtermaterials auch bei Punkt C ändern, so daß das Farberscheinungsbild bei Punkt B in Abb. 2 erst bei Erreichen von Punkt C auftritt und festgestellt wird.

Die Auswahl richtet sich nach den technischen Spezifikationen, die einzuhalten sind.

Mit der funktionellen Gruppe R-SO₃H im Filtermaterial können beispielsweise auch Phosphin (PH₃) und seine Derivate oder Alkylamine aus der Luft ausgefiltert werden. Die auszufilternden Bestandteile reagieren mit der funktionellen Gruppe R-SO₃H in der beschriebenen Weise.

Da sowohl die Filtrations- als auch die Indikatorreaktion der Beispiele nach Abb. 2 und 3 eine reversible Säure-Base-Reaktion sind, ist es möglich, das Filter 2 und den Indikator eines verbrauchten Filters zu regenerieren. Hierzu wird das Filter 2 in Kontakt mit einer Regenerationslösung gebracht, die im Fall des Beispiels nach Abb. 2 alkalisch, z.B. NaHCO₃, im Fall des Beispiels nach Abb. 3 sauer, z.B. H₂SO₄, ist. Dies kann mit einem aus dem Gasstrom entnommenen Filter oder auch ohne Demontage des Filters geschehen.

Das Filtermaterial kann saure oder basische strukturelle Gruppen enthalten. Die sauren strukturellen Gruppen können Sulfonsäure-, Carbonsäure- oder Phosphorsäuregruppen sein. Basische strukturelle Gruppen können Stickstoff, primäre, sekundäre und ternäre Amine, quarternäre Ammoniumgruppen oder Heterozyklen mit Stickstoff enthalten. Die kationen- oder anionentauschenden Gruppen sind innerhalb des Filtermaterials, vorzugsweise auch an der Oberfläche des Filtermaterials, vorgesehen. Darüber hinaus kann das Filtermaterial durch inertes Material gebildet sein, das in seiner Struktur oder an seiner Oberfläche nicht flüchtige Säuren und Basen und wenigstens einen Indikator enthält, die nachträglich aufgebracht wurden.

Das Filter 2 mit Farbumschlag kann auf unterschiedliche Weise hergestellt werden. So kann der Indikator durch eine chemische Bindung mit den Ausgangsmaterialien des Filters 2 verbunden werden. Im Ausgangsmaterial des Filters 2 können auch Indikatorverbindungen durch physikalische Mischung eingebracht werden. Es ist ferner möglich, auf das Ausgangsmaterial des Filters 2 die Indikatoren durch lonenaustausch aufzubringen. Schließlich ist eine physikalische Adsorption der Indikatoren auf dem fertig hergestellten Filtermaterial möglich.

Der beschriebene Filtrationsprozeß kann auch dazu verwendet werden, die Regelmäßigkeit der Gasströmung durch das Filter 2 zu überwachen. In diesem Fall ist entweder visuell oder über mehrere Sensoren die räumliche Verteilung der erschöpften Filterbereiche zu überwachen.

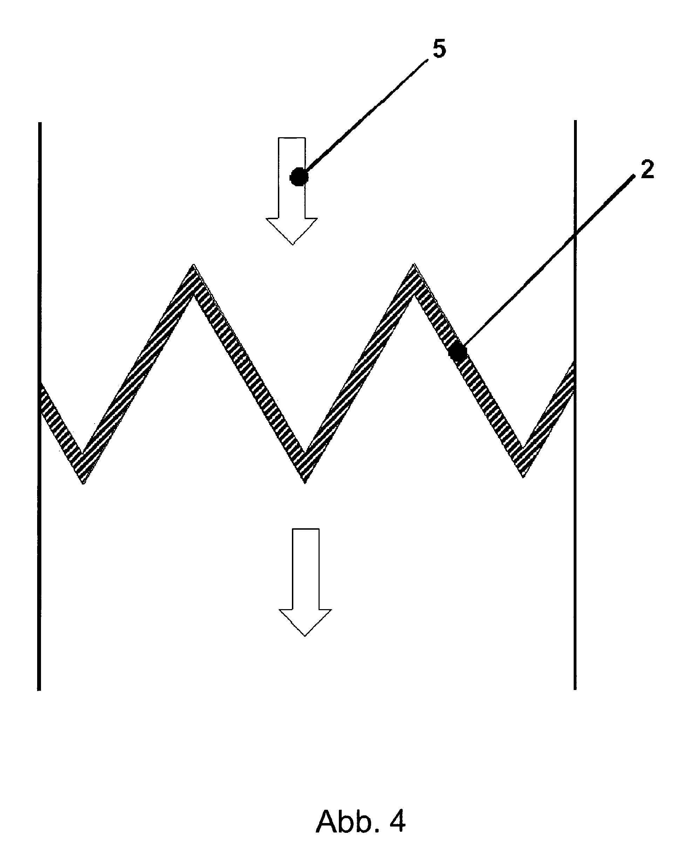

Zur Vergrößerung der Filterfläche kann das den Farbumschlag zeigende Filtermaterial auch in gefalteter Form eingesetzt sein, wie in Abb. 4 gezeigt. Die Filterflächen des Filters 2 liegen jeweils schräg zur Strömungsrichtung 5 des zu reinigenden Gases.

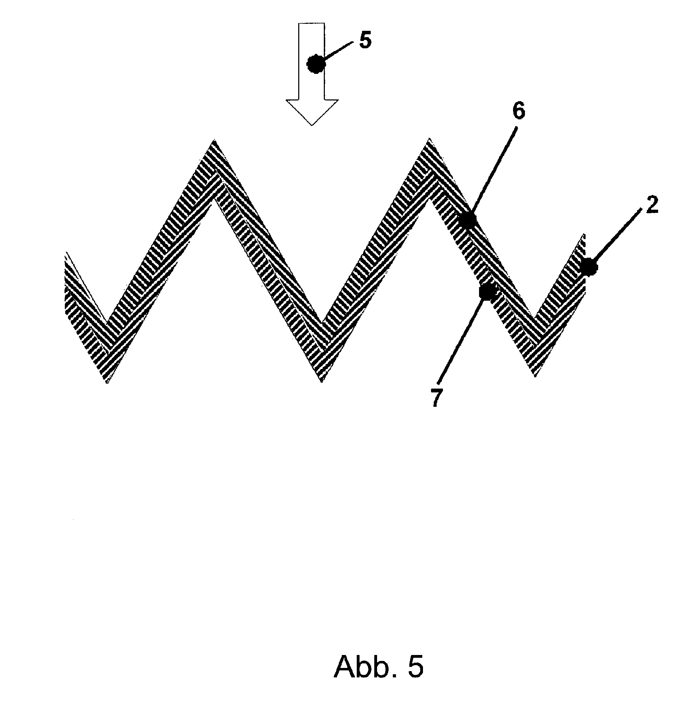

Sprechen Gründe, beispielsweise Undurchsichtigkeit des Kanalmaterials der Filtereinheit 1, Unmöglichkeit der Verwendung von Sichtfenstern oder Sensoren oder andere gegen einen Einsatz des den Farbumschlag zeigenden Materials, kann es nach Abb. 5 mit anderen Filterschichten kombiniert werden, indem verschiedene Schichten im gleichen Filter 2 angeordnet werden, so daß sie vom zu filtrierenden Gas nacheinander durchströmt werden. Besonders vorteilhaft ist dabei, die den Farbumschlag zeigende Schicht als letzte anzuwenden, da die Erschöpfung des Filters 2 so sicher visuell erkannt werden kann. Im dargestellten Ausführungsbeispiel trifft das in Richtung 5 strömende Gas zunächst auf die Filterschicht 6, die keinen Indikator enthält. Dadurch tritt in dieser Schicht kein Farbumschlag auf. An die Filterschicht 6 schließt eine Filterschicht 7 an, die den Farbindikator enthält, wie anhand der vorigen Ausführungsbeispiele erläutert worden ist. Das Filter 2 ist entsprechend der Ausführungsform nach Abb. 4 mehrfach gefaltet.

Beispielsweise kann zur Filtration von Ozon eine dunkelbraune Schicht 6 von Mangandioxid (Mn02) mit einer hellen Papierschicht 7, die mit Kaliumjodidlösung getränkt ist, kombiniert werden.

Die Filtration von Ozon erfolgt dabei nach der Gleichung

2 O₃ + MnO₂ → 3 O₂ + MnO₂

Das MnO₂ verbraucht sich dabei nicht stöchiometrisch, sondern wirkt als Katalysator, dessen Aktivität sich jedoch mit der Zeit erschöpft. Ein Dunkelwerden des hellen Papiers 7 (durch Bildung von I₂) zeigt den Durchbruch von Ozon durch das MnO₂ Filter und damit dessen Erschöpfung an.

Die Indikation erfolgt dabei nach der Gleichung

2 Kl (hell) + O₃ + H₂O -> 2 KOH + O₂ + I₂ (dunkel)

Zur Verstärkung des Farbumschlags ist in diesem Fall Stärke zuzusetzen, die die Indikatorreaktion optisch (visuell) deutlicher sichtbar macht. Wegen der dunklen Farbe des Indikators kann dieses Indikatorsystem nicht mit dem Filter direkt kombiniert werden, da der Umschlag nicht sichtbar wäre.

Das verbrauchte Filter ist in diesem Fall nicht regenerierbar.

Zur Filtration von H₂S kann ein katalytisch wirksames Kohlefilter, dessen Farbe schwarz ist, mit einer hellen Papierschicht, imprägniert mit FeSO₄, kombiniert werden.

Die Filtrationsreaktion ist

H₂S + 2O₂ + C → H₂SO₄ + C

Wiederum ist die Oxidation des H₂S eine katalytische Reaktion, bei der die Kohle nicht verbraucht wird. Weil die gebildete Schwefelsäure durch die Adsorptionskräfte in der Kohle gebunden wird, erschöpft sich die Filtrationswirkung der Kohle allmählich. Der Durchbruch wird durch die Entstehung dunkler Flecken von CuS in der blauen Papierschicht angezeigt. Indikatorgleichung:

CuSO₄ + H₂S -> CuS + H₂SO₄.

Das Filter im genannten Beispiel ist regenerierbar, indem durch Waschen mit Wasser die gebildete H₂SO₄ aus den Poren der Aktivkohle entfernt wird. Der Indikator ist jedoch durch eine irreversible chemische Reaktion verbraucht und mit einfachen Mitteln nicht regenerierbar. Es kann jedoch in einfacher Form das regenerierte Kohlefilter mit einer neu hergestellten und frisch aufgebrachten Lage Indikatorpapier versehen werden.

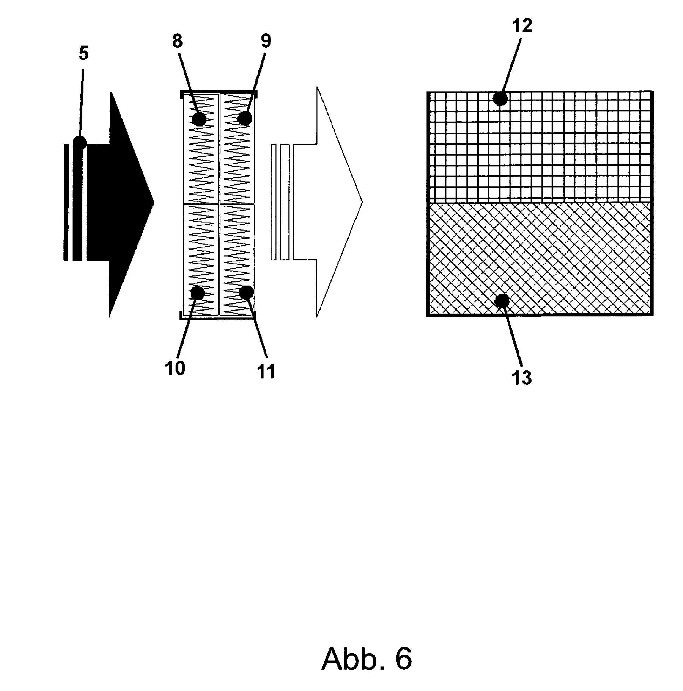

Abb. 6 zeigt eine Kombination von sauren und basischen Filtern, die nacheinander vom zu filtrierenden Gas durchströmt werden, wobei in der oberen Hälfte der Filteranordnung die für basische Substanzen wirksame, in der unteren Hälfte die für saure Substanzen wirksame Schicht die mit Farbumschlag versehene und jeweils strömungsseitig letzte Schicht ist. So kann bei einem Gas, das abwechselnd mit sauren und basischen Komponenten beladen ist, die Erschöpfung der für Säuren bzw. Basen wirksamen Filterbestandteile wirksam und unabhängig voneinander durch den jeweiligen Farbumschlag festgestellt werden.

Dem Filter 8 für Säuren ist ein Filter 9 für Basen mit Indikator nachgeschaltet. Entsprechend folgt dem Filter 10 für Basen ein Filter 11 für Säuren mit Indikator. Nach dem Durchtritt des Gases durch die Filter ist das Gas von den unerwünschten Bestandteilen gereinigt. Da die mit den Indikatoren versehenen Filter 9, 11 in Strömungsrichtung hinter den Filtern 8, 10 liegen, kann an der abströmseitigen Filterfläche 12, 13 der Farbumschlag zuverlässig erfaßt werden.

## Patentansprüche

1. Verfahren zum Abscheiden von gasförmigen Bestandteilen in gasförmigen Medien, insbesondere in Luft, bei dem das gasförmige Medium durch wenigstens ein Filter strömt, das die gasförmigen Bestandteile zurückhält, **dadurch gekennzeichnet, daß** die Bestandteile mit wenigstens einem im Filter (2; 8 bis 11) vorhandenen Indikator reagieren, der durch die Reaktion eine Farbänderung oder optische Änderung des Filtermaterials hervorruft.

2. Verfahren nach Anspruch 1,
**dadurch gekennzeichnet, daß** das Filtermaterial funktionelle Gruppen aufweist oder enthält, die mit den gasförmigen Bestandteilen im gasförmigen Medium reagieren.

3. Verfahren nach Anspruch 1 oder 2,
**dadurch gekennzeichnet, daß** für das Filter (2; 8 bis 11) faserförmige, granulatförmige, membran- oder filmartige Materialien verwendet werden.

4. Verfahren nach einem der Ansprüche 1 bis 3,
**dadurch gekennzeichnet, daß** das gasförmige Medium im Filter (2; 8 bis 11) verschiedene Schichten (6, 7) durchströmt.

5. Verfahren nach Anspruch 4,
**dadurch gekennzeichnet, daß** die verschiedenen Schichten (6, 7) verschiedene funktionelle Gruppen aufweisen oder enthalten.

6. Verfahren nach Anspruch 4 oder 5,
**dadurch gekennzeichnet, daß** die den Indikator enthaltende Schicht (7) von der Schicht (6), die die funktionellen Gruppen enthält, getrennt ist.

7. Verfahren nach einem der Ansprüche 2 bis 6,
**dadurch gekennzeichnet, daß** die funktionellen Gruppen basische oder saure Gruppen sind.

8. Verfahren nach einem der Ansprüche 1 bis 7,
**dadurch gekennzeichnet, daß** die Farbveränderung oder optische Änderung durch mindestens einen Sensor (4) registriert wird.

9. Verfahren nach Anspruch 8,
**dadurch gekennzeichnet, daß** die optische Veränderung, die durch mindestens einen Sensor (4) registriert wird, visuell nicht sichtbar ist.

10. Verfahren nach einem der Ansprüche 1 bis 9,
**dadurch gekennzeichnet, daß** der Zeitpunkt des Farbumschlags oder der optischen Änderung durch Auswahl des Indikators an das gewünschte Niveau der Durchbruchskonzentration angepaßt ist.

11. Verfahren nach einem der Ansprüche 1 bis 10,
**dadurch gekennzeichnet, daß** der Indikator regeneriert werden kann.

12. Filter zur Durchführung des Verfahrens nach einem der Ansprüche 1 bis 11, mit wenigstens einem Filtermaterial, **dadurch gekennzeichnet, daß** das Filtermaterial funktionelle Gruppen, die mit dem zu entfernenden gasförmigen Bestandteil reagieren, und wenigstens einen protonenempfindlichen Indikator aufweist.

13. Filtereinheit bestehend aus mindestens zwei Filtern nach Anspruch 12,
**dadurch gekennzeichnet, daß** jedes Filter (8, 9; 10, 11) aus mindestens zwei Schichten zur Entfernung saurer und basischer Bestandteile des gasförmigen Mediums besteht, die nacheinander durchströmt werden, und daß das gasförmige Medium mindestens zwei Filter (8, 9; 10, 11) parallel mit gleicher Geschwindigkeit durchströmt, die jeweils unterschiedliche auslaßseitige Filtrationsmedien haben.
